(19) **Europäisches Patentamt**

**European Patent Office**

**Office européen des brevets**

(11) Numéro de publication : **0 293 284 B1**

(12) **FASCICULE DE BREVET EUROPEEN**

(45) Date de publication du fascicule du brevet :
**31.07.91 Bulletin 91/31**

(21) Numéro de dépôt : **88401171.9**

(22) Date de dépôt : **13.05.88**

(51) Int. Cl.⁵ : **B61D 45/00, B60P 7/14**

(54) Dispositif de suspension de cloisons, cloisons pourvues de ce dispositif et compartiments qui en sont équipés.

(30) Priorité : **26.05.87 FR 8707648**

(43) Date de publication de la demande :
**30.11.88 Bulletin 88/48**

(45) Mention de la délivrance du brevet :
**31.07.91 Bulletin 91/31**

(84) Etats contractants désignés :
**AT BE CH DE ES FR GB GR IT LI LU NL SE**

(56) Documents cités :
**EP-A- 0 152 788**
**DE-A- 3 522 972**
**US-A- 3 185 111**
**US-A- 3 215 092**

(73) Titulaire : **ARBEL FAUVET RAIL S.A.**
**140 rue du Paradis**
**F-59500 Douai (FR)**

(72) Inventeur : **Vilette, Christian**
**13 rue Voltaire Tison**
**F-59870 Vred (FR)**

(74) Mandataire : **Ecrepont, Robert**
**Cabinet Ecrepont 12 Place Simon Vollant**
**F-59800 Lille (FR)**

Jouve, 18, rue Saint-Denis, 75001 PARIS

## Description

L'invention se rapporte à un dispositif de suspension de cloisons destinées à subdiviser le compartiment à marchandises de véhicules tel celui de véhicules ferroviaires et occupant approximativement la section transversale du compartiment. Elle se rapporte également aux cloisons pourvues de ce dispositif de suspension et aux compartiments qui en sont équipés.

Les cloisons de séparation de ce type sont actuellement utilisées par les compagnies nationales de chemins de fer de manière à partager le compartiment marchandise des wagons selon un cloisonnement dont les dimensions longitudinales peuvent être modifiées en fonction des marchandises transportées.

A cet effet, pour délimiter longitudinalement ce compartiment, est connue (FR-A-2496581, US-A-3185111 et 2288840) une cloison comprenant généralement un chassis en profilés suspendu par sa partie supérieure à un arbre muni d'organes de roulement au long de rails fixés à demeure sous le pavillon du wagon. Pour sa suspension à l'arbre, la cloison est pourvue d'au moins une suspente associée à l'arbre le plus près possible de ses organes de roulement.

En outre, cette cloison ainsi guidée est pourvue sur ses bords supérieur et inférieur d'organes de verrouillage tels des tenons coopérant avec des logements réalisés dans la caisse du wagon. Généralement, pour contribuer à la rigidité de la cloison ainsi immobilisée, ces logements sont les plus écartés possible et pour le bord supérieur, réalisés au delà des rails recevant les organes de roulement de la cloison et au niveau de la plateforme du wagon, aux extrémités du bord inférieur de la cloison.

Si ce système de suspension donne de bons résultats pour compartimenter un tel wagon, il est à noter que la mise en place des organes de verrouillage de la cloison exige un alignement rigoureux des tenons et de leur logement, lequel alignement est bien évidemment fonction de différents facteurs tels la côte de chacun des rails de suspension par rapport à la plateforme du wagon et l'inclinaison du wagon.

En effet, compte tenu du devers de la voie et du jeu inhérent à la suspension de la cloison, l'inclinaison du wagon entraîne inévitablement le glissement transversal de la dite cloison, et de ce fait, provoque un déport de ses tenons par rapport à leur logement.

Il en est de même, si pour des raisons de fabrication ou de déformation résultant de chocs, la côte respective à chacun des rails présentait une différence même légère.

La cloison accuserait alors systématiquement, en raison de sa hauteur, une obliquité qui entraînerait un déport des tenons par rapport à leur logement tel que le verrouillage de la dite cloison serait devenu impossible.

Bien évidemment, pour pallier à cet inconvénient, les logements peuvent présenter un évidement beaucoup plus important permettant d'absorber ce déport.

Cependant, dans cette configuration, il est à noter que la réalisation de tels logements permet aux tenons de battre dans leur logement et demande une puissance de perçages beaucoup plus importante ce qui grève d'autant plus le prix de revient d'un wagon ainsi équipé.

En outre, pour contribuer à résorber ce déport, les rails recevant les organes de roulement de la cloison doivent pour les raisons précitées néanmoins être posés en respectant des conditions géométriques rigoureuses.

L'invention a pour but de remédier à ces inconvénients et propose un dispositif de suspension de cloison qui s'affranchit des conditions géométriques rigoureuses nécessaires à son implantation à l'intérieur du compartiment à marchandises d'un véhicule tel un véhicule ferroviaire.

A cet effet, l'invention a pour objet un dispositif de suspension de cloison du type précité principalement caractérisé en ce que sa suspente centrale est scindée en deux parties distinctes, l'une fixée à la partie supérieure de la cloison et l'autre associée à l'arbre muni des organes de roulement et en ce que ces parties distinctes sont assemblées entre elles par une liaison rotoïde d'axe sensiblement parallèle au déplacement longitudinal de la dite cloison.

L'invention sera bien comprise à l'aide de la description ci-après faite à titre d'exemple non limitatif en regard du dessin ci-annexé qui représente schématiquement :

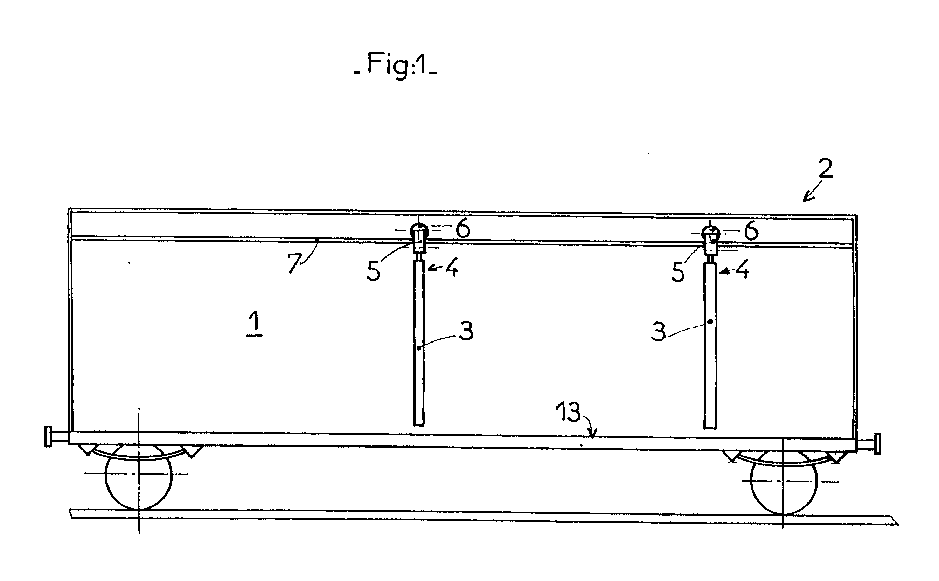

— figure 1 : le wagon vu en coupe longitudinale,

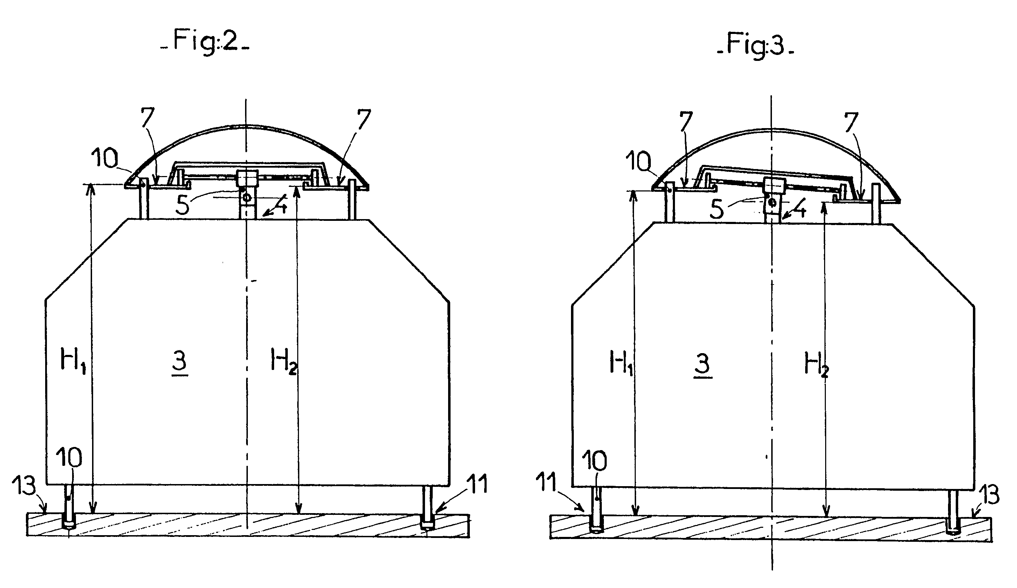

— figure 2 : une cloison équipée du dispositif de suspension vue en position idéale dans le compartiment,
— figure 3 : une cloison équipée du dispositif de suspension vue en position inclinée par rapport à sa position idéale,

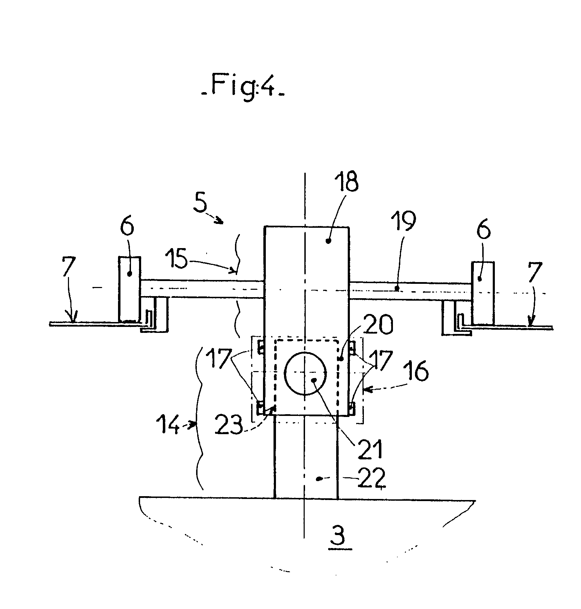

— figure 4 : le dispositif de suspension vu à plus grande échelle.

En se reportant au dessin, on voit que pour subdiviser un compartiment à marchandises 1 d'un véhicule 2 tel un véhicule ferroviaire, au moins une cloison 3 occupe approximativement toute la section transversale du dit compartiment.

En raison de la variabilité des caractéristiques dimensionnelles des marchandises transportées pour que le compartimentage ainsi réalisé puisse bénéficier de dimensions longitudinalement variables, chaque cloison 3 comprend généralement un chassis suspendu par un dispositif de suspension 5 à sa partie supérieure 4 à un chariot tel un arbre muni d'organes de roulement 6 au long de rails 7 fixés à demeure sous le pavillon du véhicule.

En outre, pour immobiliser chacune de ces cloisons guidées longitudinalement à l'intérieur du compartiment à marchandises, celles-ci sont respectivement munies tant à leur partie supérieure qu'à leur partie inférieure d'organes de verrouillage tels des tenons 10 et qui, à cet effet, coopèrent avec des logements 11 réalisés dans la caisse du véhicule.

Bien évidemment, le verrouillage d'une telle cloison 3 nécessite systématiquement un alignement rigoureux des tenons et de leur logement 11, alignement d'autant plus nécessaire que, par rapport à la plateforme 13 du véhicule 2, les côtes H1 et H2 relatifs à chaque rail sont différentes.

En effet, que ce soit pour des raisons de fabrication ou de déformation résultant de chocs, il apparaît clairement que cette différence entre les côtes H1 et H2 en regard de la hauteur de la cloison 3, provoque un déport des tenons 10 de leur logement 11 qu'il faut, nécéssairement résorber, pour pouvoir assurer le verrouillage de la dite cloison 3.

A cet effet, au lieu de comprendre une suspente centrale en une seule pièce, le dispositif de suspension 5, selon l'invention, est caractérisé en ce que sa suspente centrale est scindée en deux parties 14, 15 distinctes, l'une 14 fixée à la partie supérieure 4 de la cloison 3 et l'autre 15 associé au chariot muni des organes de roulement 6 et en ce que ces parties distinctes 14, 15 sont assemblées entre elles par une liaison rotoïde 16 d'axe sensiblement parallèle au déplacement longitudinal de la dite cloison 3.

Ainsi donc, on note bien évidemment que si la différence entre les côtes H1 et H2 influe directement sur la partie 15 recevant les organes de roulement en provoquant son obliquité, la liaison rotoïde 16 permet d'anihiler cet effet sur la partie 14 fixée à la partie supérieure de la cloison 3 et, par conséquent, de respecter l'alignement des tenons 10 et de leur logement 11.

En raison de la liaison rotoïde 16 autour de l'axe de laquelle peut osciller la paroi 3 pour éviter que celle-ci 3 lors de son déplacement longitudinal à l'intérieur du compartiment à marchandises 1 heurte la caisse du véhicule 2 selon l'invention, chacune des parties 14, 15 est pourvue respectivement de butées 17 destinées à limiter l'amplitude angulaire du débattement de la partie 14 fixée à la partie supérieure 4 de la cloison 3. Dans une forme préférée de réalisation, la partie 15 est associée au chariot muni des organes de roulement 6 par un palier 18 de guidage en rotation de l'arbre 19 pourvu des dits organes pour constituer le dit chariot et ce palier comprend une chape 20 portant un axe 21 traversant la partie du dispositif de fixation fixée à la partie supérieure 4 de la cloison 3. La partie du dispositif de fixation fixée à la cloison est réalisée par une suspente 22 assemblée sur la dite cloison 3 par l'une de ses extrémités et pourvue à son autre extrémité d'une oreille 23 traversée par l'axe 21 de la chape 20.

## Revendications

1. Dispositif de suspension (5) d'une cloison (3) destinée à subdiviser le compartiment à marchandises (1) de véhicules (2) tels les véhicules ferroviaires et qui, occupant sensiblement toute la section transversale du dit compartiment est guidée en translation à l'intérieur de celui-ci par suspension de sa partie supérieure (4) à un chariot muni d'organes de roulement (6) guidés au long de rails (7) fixés à demeure sous le pavillon du véhicule, laquelle suspension met en oeuvre une suspente centrale (22), ce dispositif étant **CARACTERISE** en ce que sa suspente centrale est scindée en deux parties (14, 15) distinctes, l'une (14) fixée à la partie supérieure (4) de la cloison (3) et l'autre (15) associé au chariot muni des organes de roulement (6) et en ce que ces parties distinctes sont assemblées entre elles par une liaison rotoïde (16) d'axe sensiblement parallèle au déplacement longitudinal de la dite cloison.

2. Dispositif selon la revendication 1 caractérisé en ce que chacune des parties (14, 15) est pourvue respectivement de butées (17) destinées à limiter l'amplitude angulaire du débattement de la partie (14) fixée à la partie supérieure (4) de la cloison (3).

3. Dispositif selon la revendication 1 ou 2 caractérisé en ce que la partie (15) est associée au chariot muni des organes de roulement (6) par un palier (18) de guidage en rotation de l'arbre (19) pourvu des dits organes pour constituer le dit chariot et ce palier comprend une chape (20) portant un axe (21) traversant la partie du dispositif de fixation fixée à la partie supérieure (4) de la cloison (3).

4. Dispositif selon la revendication 3 caractérisé en ce que la partie du dispositif de fixation fixée à la cloison est réalisée par une suspente (22) assemblée sur la dite cloison (3) par l'une de ses extrémités et pourvue à son autre extrémité d'une oreille (23) traversée par l'axe (21) de la chape (20).

5. Cloison destinée à subdiviser un compartiment à marchandises de véhicule caractérisé en ce qu'elle est pourvue du dispositif de suspension (5) selon l'une quelconque des revendications 1 à 4.

6. Compartiment à marchandises de véhicule caractérisé en ce qu'il est pourvu d'au moins une cloison (3) selon la revendication 5.

## Patentansprüche

1. Aufhängevorrichtung (5) für eine Wand (3), die für die Unterteilung des Güterabteils (1) von Fahrzeugen (2), wie z.B. Eisenbahnwaggons, bestimmt ist und die im wesentlichen den gesamten Querschnitt des Abteils einnehmend in dessen Innerem verschiebbar geführt ist durch Aufhängen ihres oberen Abschnitts (4) an einem Fahrgestell, das Rollelemente (6) aufweist, die längs Schienen (7), die unter dem Dach des Fahrzeugs dauernd befestigt sind, geführt sind, wobei diese Aufhängung eine zentrale Aufhängeeinrichtung (22) ermöglicht, dadurch gekennzeichnet, daß die zentrale Aufhängeeinrichtung in zwei verschiedene Teile (14, 15) unterteilt ist, wobei das eine Teil (14) am oberen Abschnitt (4) der Wand (3) angebracht und das andere Teil (15) mit dem Fahrgestell, das Rollelemente (6) aufweist, verbunden ist, und daß diese verschiedenen Teile durch eine rotierende Verbindung (16) mit einer Achse, die im wesentlichen parallel zur Längsverschiebung der Wand verläuft, miteinander verbunden sind.

2. Vorrichtung nach Anspruch 1, dadurch gekennzeichnet, daß für jedes der Teile (14, 15) ein jeweiliger Anschlag (17) vorgesehen ist, der dafür vorgesehen ist, die Weite des Ausschlagswinkels des Teils (14) einzuschränken, das am oberen Abschnitt (4) der Wand (3) angebracht ist.

3. Vorrichtung nach Anspruch 1 oder 2, dadurch gekennzeichnet, daß das Teil (15) mit dem Fahrgestell, das Rollelemente (6) aufweist, über ein Rotationsführungslager (18) der Welle (19), die mit den genannten Elementen versehen ist, verbunden ist, um das Fahrgestell zu bilden, und daß dieses Lager einen Kopf (20) aufweist, der eine Achse (21) trägt, die die am oberen Teil (4) der Wand (3) angeordnete Halterungsvorrichtung durchdringt.

4. Vorrichtung nach Anspruch 3, dadurch gekennzeichnet, daß das Teil der Halterungsvorrichtung, das an der Wand angebracht ist, von einer Aufhängeeinrichtung (22) gebildet wird, die an der Wand (3) mit einem ihrer Enden befestigt ist und am anderen Ende mit einer Öse (23) versehen ist, die von der Achse (21) des Kopfes (20) durchdrungen wird.

5. Wand für die Unterteilung eines Güterabteils eines Fahrzeugs, dadurch gekennzeichnet, daß sie mit einer Aufhängevorrichtung (5) nach einem der Ansprüche 1 bis 4 versehen ist.

6. Güterabteil eines Fahrzeugs, dadurch gekennzeichnet, daß es mindesten eine Wand (3) nach Anspruch 5 aufweist.

## Claims

1. Means for the suspension (5) of a partition wall (3) which is designed to subdivide the goods compartment (1) of vehicles (2) such as railway vehicles and which, while occupying substantially all the transverse cross-section of the said compartment, is guided for lateral movement therein by suspension of its upper part (4) from a carriage fitted with rolling means (6) guided along rails (7) which are firmly fixed below the roof of the vehicle, the said suspension incorporating a central suspension member (22), these means being characterised in that the central suspension member is divided into two separate parts (14, 15), one of which (14) is fixed to the upper part (4) of the partition wall (3) and the other of which (15) is associated with the carriage fitted with rolling means (6) and in that these separate parts are assembled together by means of a rotational joint (16) having an axis substantially parallel to the longitudinal displacement of the said partition walls.

2. Means according to claim 1, characterised in that each of the parts (14, 15) is provided respectively with end stops (17) designed to limit the angular clearance amplitude of the part (14) fixed to the upper part (4) of the partition wall (3).

3. Means according to claim 1 or 2, characterised in that the part (15) is associated with the carriage fitted with rolling means (6) through a bearing (18) guiding the rotation of the shaft (19) provided with the said members in order to form the said carriage and that this bearing incorporates a cover (20) bearing an axis (21) passes through the part of the attachment device which is fixed to the upper part (4) of the partition wall (3).

4. Means according to claim 3, characterised in that the part of the attachment device fixed to the partition wall is constructed of a suspension member (22) assembled to the said wall (3) at one end and provided at its other end with a lug (23) through which the axis (21) of the cover (20) passes.

5. A partition wall designed to subdivide the goods compartment of a vehicle characterised in that it is provided with suspension means (5) according to any one of claims 1 to 4.

6. A goods compartment of a vehicle characterised in that it is provided with at least one partition wall (3) according to claim 5.

_Fig:1_

_Fig:2_                    _Fig:3_

EP 0 293 284 B1

_Fig:4_

EP 0 293 284 B1